# EUROPEAN PATENT SPECIFICATION

(11) **EP 1 980 379 B1**
(45) Date of publication and mention of the grant of the patent: **05.06.2013**
(21) Application number: 07704719.9
(22) Date of filing: 05.01.2007
(51) Int. Cl.: B29B 17/04, B26D 1/00

(54) **TYRE CRUSHING MACHINE**
REIFENZERKLEINERUNGSMASCHINE
MACHINE DE BROYAGE DE PNEUS

(30) Priority: 05.01.2006 ES 200600022
(43) Date of publication of application: 15.10.2008
(73) Proprietor: Aranega Ruiz, Dolores, 43141 Vilallonga del Camp, Tarragona (ES); Foix Aranega, Elisabeth, 43141 Vilallonga del Camp, Tarragona (ES); Foix Aranega, Meritxell, 43141 Vilallonga del Camp, Tarragona (ES); Foix Aranega, Elena, 43141 Vilallonga del Camp, Tarragona (ES)
(72) Inventor: Aranega Ruiz, Dolores, 43141 Vilallonga del Camp, Tarragona (ES); Foix Aranega, Elisabeth, 43141 Vilallonga del Camp, Tarragona (ES); Foix Aranega, Meritxell, 43141 Vilallonga del Camp, Tarragona (ES); Foix Aranega, Elena, 43141 Vilallonga del Camp, Tarragona (ES)
(74) Representative: Carpintero Lopez, Francisco
(86) International application number: PCT/ES2007/000005
(87) International publication number: WO 2007/077282

(56) References cited:
- WO-A1-2005/068132
- ES-A1- 2 232 263
- US-A- 3 693 894

## Description

### OBJECT OF THE INVENTION

The present invention relates to a tire grinding machine, the clear aim whereof is that of shredding the tires of vehicles in order to obtain a granulate or portions of minimal size both of rubber and of metallic material which make up the tire, or in its case, textile material which forms part of some tires.

The object of the present invention is to achieve a reduction of the tires, upon being shredded into granules, and thereby avoid large storage spaces, machinery and means which conventionally are used to get rid of said type of material.

### BACKGROUND OF THE INVENTION

The massive commercialisation of motor vehicles entails a large use of tires which, due to the wear thereof, require a periodic change.

This enormous quantity of useless tires results in a serious problem not only of storage, for the large volume that they occupy, but because it is very difficult to carry out the elimination thereof, as sophisticated systems must be used, of high cost and, which is more important, with a very negative environmental repercussion, as it is known that tires, upon being constituted from rubber mixed with metallic material, results in considerable contamination.

Devices or machines are known that are used for the shredding of tires, wherein said tires are disposed on a support, which makes them rotate so that their engagement and contact with the blades of a roller, also rotational, carry out the shredding and consequent granulation of the tire, obtaining small portions of rubber and wire, which, based on means, such as strong magnets, it is possible in the same process to separate the rubber from the metal and thereby achieve a recycling for different purposes.

In this sense, Spanish patent ES 2.232.263, which compounds to WO 2005/068132, could be cited, wherein a tire recycling machine of the type previously referred to is disclosed, but with an important novelty. The tires can be loaded on a cylinder or axle support which permits the insertion of several tires, performing the shredding progressively and continuously of all of those by means of the cylinder bearing the shredding blades. However, the aforementioned machine features production or performance limitations, such as functionality and effectiveness, since it does not provide optimal fastening and pressuring means of the tires in the loaded cylinder, nor is the final shredding of the tire carried out, etc.

### DESCRIPTION OF THE INVENTION

The grinding machine proposed has been devised to resolve the aforementioned problem, based on improvements which can be summarised in the following:
- The first improvement consists in that the blade-bearing roller remains axially static even though it is rotational and operated through a transmission, by means of a motor.
- A second improvement consists in that the tire loading cylinder features at its initial or entrance end, elastic devices which facilitate the introduction of the tires but prevent backward movement thereof, thereby maintaining the pressuring thereof in the interior of the loading cylinder.
- A third improvement consists in that the loading of the tires is carried out by means of a pneumatic or hydraulic piston, provided with a clutch plate which pneumatically actuates and grasps the tire by its exterior and centres it and places it on the loading cylinder.
- Another improvement consists in that the interior of the loading cylinder features expandable elastic elements which exert a radial expansive action on the tire in order to achieve the immobilisation thereof at the desired moment, as well as a correct axial movement along the loading cylinder, and therewith a better performance of the machine, in addition to being able to vary the entrance of tires of different measurements and dimensions.
- Another improvement consists in that the blade-bearing roller of the grinding machine is in oblique disposition with respect to the loading cylinder, so that the tires, in their progressive and continuous push towards the inner end of said loading cylinder shreds, without the need to have to stop the machine during its operation, since it is permanently loaded, the tires remaining pressured in the interior of the loading cylinder through the effect exerted by the loading piston.
- Another improvement consists in that at the end of the loading cylinder, where the tires only press the heelpiece, given that the rest of the areas thereof have already been shredded, there are cones with blades to break up and shred the wires of the heelpieces, which, as is known, are much harder and more resistant than the rest of the wires provided for the tire, a shearing machine with cutting blades collaborating in that shredding of the wires, said shearing machine being rotational in order to produce the tearing of the heelpiece upon impacting against said blades.
- As an alternative or variant of the embodiment of the invention, it has been provided that the loading-pushing piston of the tires on the loading cylinder, instead of moving in suspension, moves guided on longitudinal bars, with the aim of avoiding possible overhangs and achieving a correct axial movement of said loading-pushing piston, with the consequent longer duration of this device.
- Optionally, the machine can be equipped with an exhaust system, in order to separate and recover the textile material which could form part of the tires.
- Also optionally, at the exit of the machine, there can be a nozzle which discharges through a blade-bearing roller, where the chopping of the tires is completed.
- In this way, a tire grinding machine is achieved which permits the complete shredding of tires forming a granulate, and allowing for the separation of the rubber from the metal with a simple conveyor belt with magnets, thus achieving a high performance in the shredding, since it does not need to be stopped given that it permits a constant loading of the tires, being especially suitable in industries where a massive shredding of tires is carried out.

### DESCRIPTION OF THE DRAWINGS

In order to complement the description being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:
- Fig. 1: shows a schematic representation in a side elevational view of the machine object of the invention;
- Fig. 2: shows a view, of the previous figure, wherein the loading cylinder full of tires is observed, wherein the grinding roller has not been represented, nevertheless having represented the cone and shearing grinder, as well as the loading piston in inoperative condition;
- Fig. 3: shows a view similar to the previous figure, wherein the grinding cylinder has already been represented, coming into contact obliquely with the tires for the shredding thereof, as well as the pushing which is exerted by the loading piston on the load of tires;

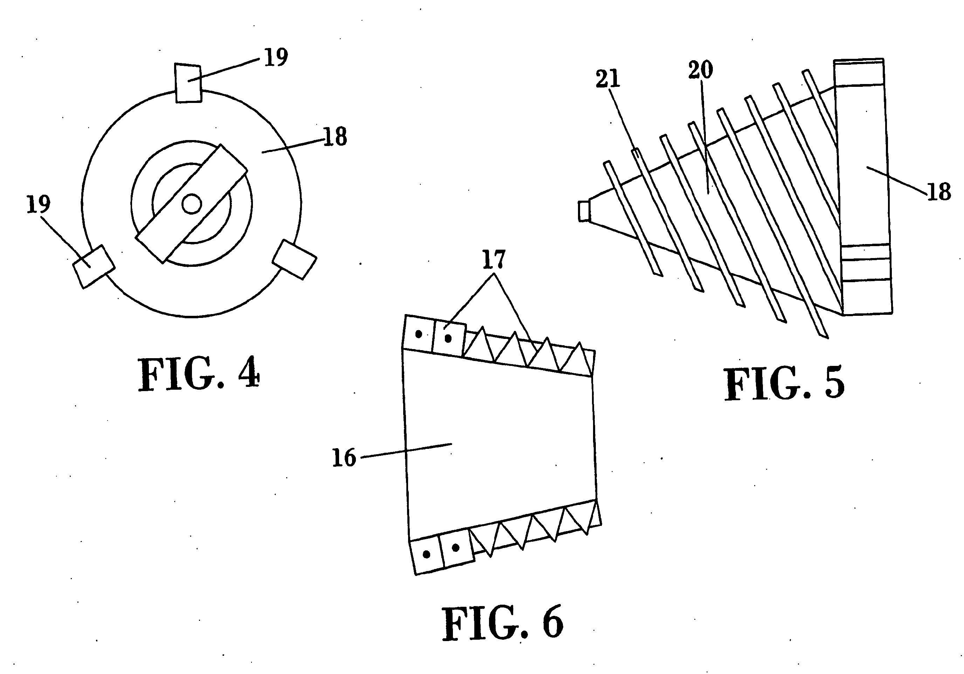

- Fig. 4: shows a frontal view of a cutting shear provided on the inner end of the loading cylinder;
- Fig. 5: shows an alternative embodiment of the shear, equipped with a type of conical configured worm on one of its sides for the guiding of the wires of the tire towards the area of the shearing blades;
- Fig. 6: shows a side view of one of the cones used in the internal area of the loading cylinder, in combination with the shear represented in the previous figure;
- Fig. 7: shows a side schematic elevational view of part of the machine, wherein the guiding of the loading piston can be observed; guiding which is carried out on four rods in order to prevent the overhang and correct axial movement thereof;
- Fig. 8: shows a detail, also side schematic elevational, of the tire loader.
- Fig. 9: shows a profile view of the assembly represented in the previous figure;
- Fig. 10: shows, finally, a side schematic elevational view of the heelpiece of complementary milling of the tires.

### PREFERRED EMBODIMENT OF THE INVENTION

In view of the figures shown, it can be observed how the machine of the invention is constituted from a frame (1) whereon is mounted a tire (3) loading cylinder (2), upon inserting these along the cylinder (2), occupying the entire length thereof, and wherein the tires (3) are pressured so that there is no air therebetween, and of course separation between the sides thereof. The loading cylinder (2) is rotational and includes at its entrance end retractable devices (4) which deform in order to permit the entrance of the tires (3) on the loading cylinder (2), and nevertheless expands once the tires (3) have been loaded, preventing the backward movement thereof.

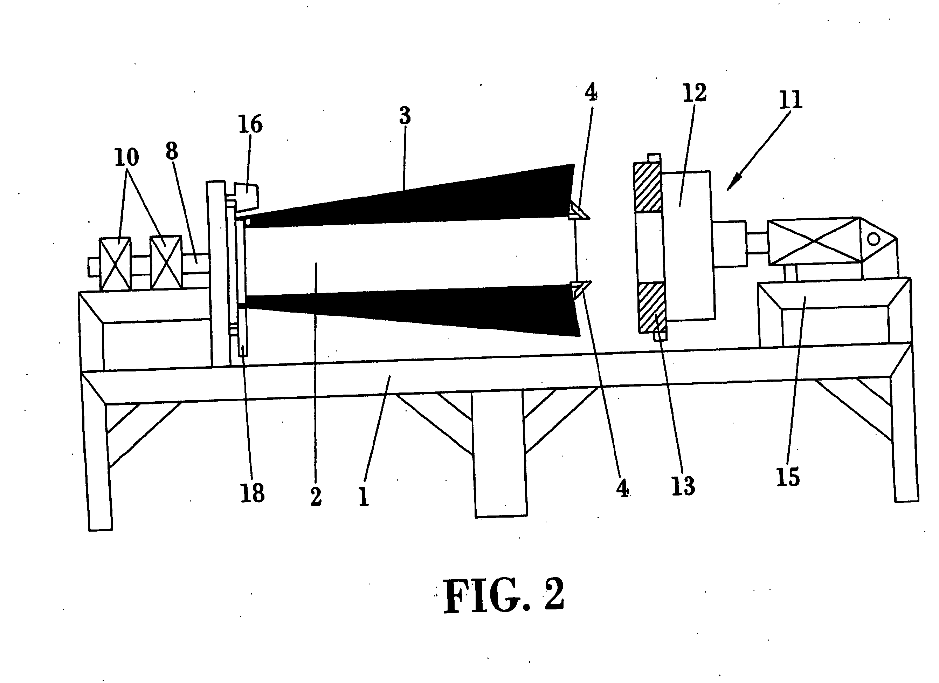

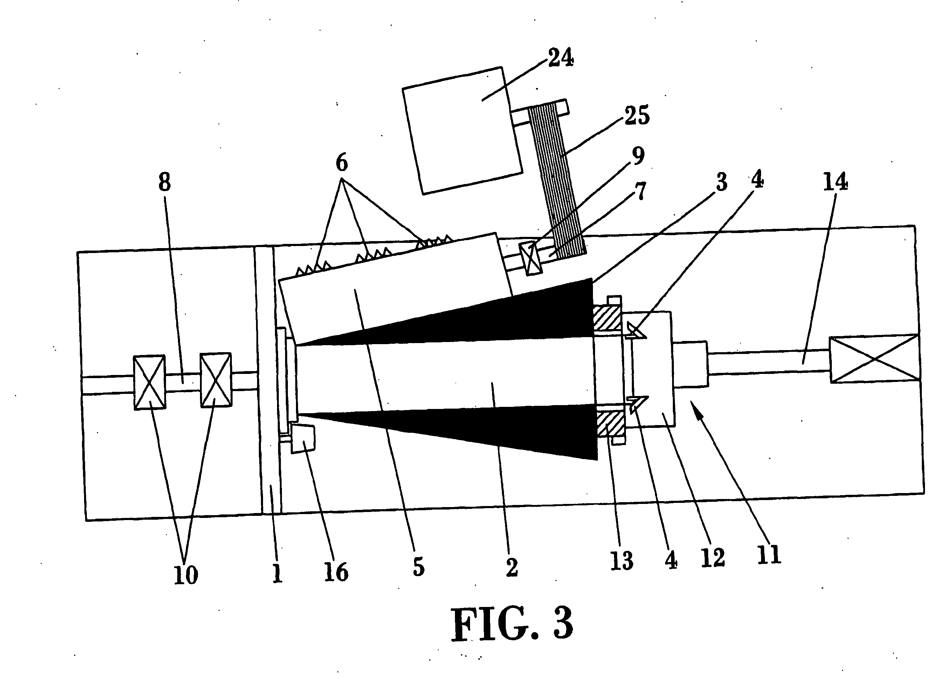

The machine has a grinding roller (5) with a plurality of external cutting blades (6), so that that roller assembly (5) with its blade (6) is mounted rotationally in oblique disposition with respect to the loading cylinder (2), as is clearly represented in figures 2 and 3, so that both the loading cylinder (2) and the grinding roller (5) area mounted on their corresponding shafts (7) and (8), respectively, with their complementary bearings (9) and (10).

The tires (3) are inserted into the loading cylinder (2) by means of a loading piston (11) equipped with a plate (12) with clutches (13) which laterally grasp each one of the tires (3), in order to introduce them by means of the expansion of the shaft (14) of said loading piston (11), in the loading cylinder (2). This loading piston (11) assembly is mounted on a frame (15) disposed on the general frame (1), as is represented in figure 2. At the end of the loading cylinder (2) are provided grinding cones (16) with their lateral surface equipped with an inclination equal to that of the grinding roller (5), the cones (16) whereof having blades and bearing plates (17) of a very hard material, for the grinding of the wires provided in the heelpieces of the tires, shears (18) with blades (19) provided rotationally in the same area as the cones (17) collaborating in that grinding, having provided in one embodiment of the shear (18) a variant wherein featured, on one of its sides, a conical extension (20) with lateral elements (21) which determine a type of conically shaped worm for the guiding of the wires of the tire corresponding to the heelpiece towards the area of the blades (18).

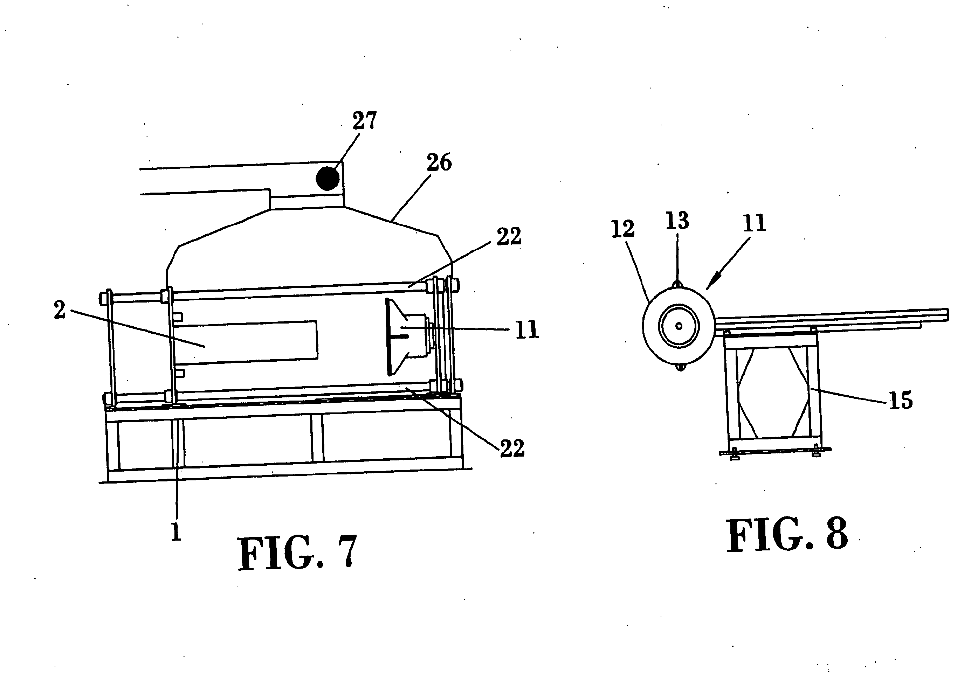

In a variant of embodiment, shown in figure 7, the loading piston (11) is guided in its movement on longitudinal rods (22), which permit a perfect movement without overhangs of said piston assembly, or pushing disc, in order to correctly introduce and guide each one of the tires on the loading cylinder (2).

Finally, to say that said loading cylinder (20) features internally expandable guides in order to slow down the entrance of the tires by the heelpieces thereof, and also allow for the variation of the entrance of different measurements and dimensions of the tires.

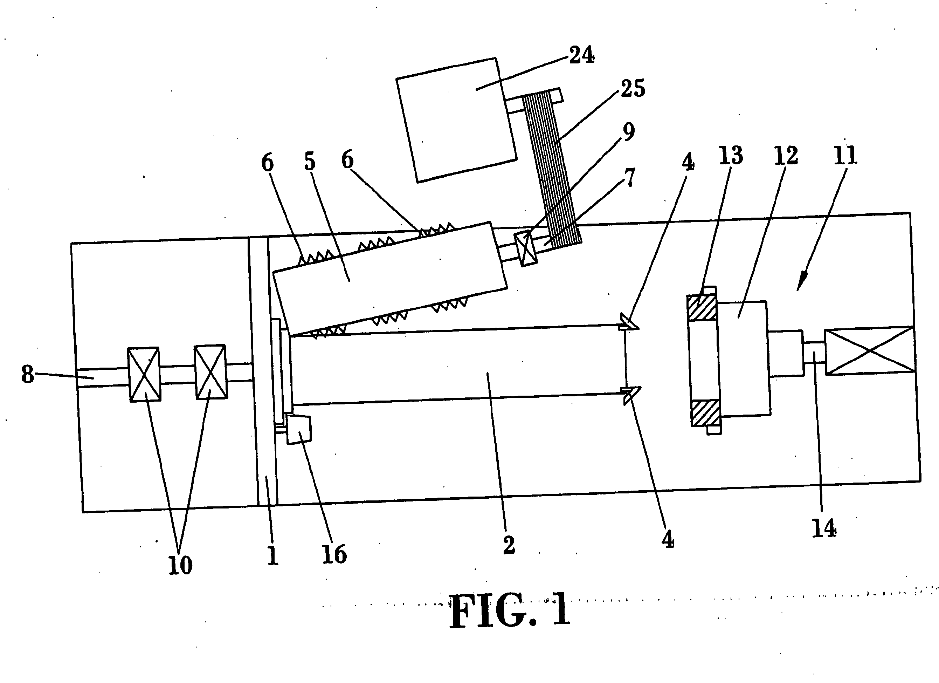

Clearly, all of the mobile elements, such as the loading cylinder (2), the grinding roller (5), the cones (16) and shears (18), are actuated by respective motors disposed on supports or exterior tables, being able to observe in figures 1 and 3 the rotational actuation of the grinding roller (5) by means of a motor (24), through a transmission (25) connected to the shaft (7) of said grinding roller (5).

The cylinder (2) is loaded with the tires (3), so that each one of these is fastened by means of the corresponding clutches (13) of the disc (12) pertaining to the loading piston (11), so that the corresponding tire (3) is centred and introduced into the loading cylinder (2), the clutches (13) automatically opening once the tire (3) has entered the loading cylinder (2).

Once this operation has been performed, the internal steering brakes of the loading cylinder (2) actuate so that the tires begin to press and be compacted one behind the other, so that as the tires enter progressively, they become grinded upon being submitted to a compacted pressing by means of the loading-pushing piston (11), so that there are no empty spaces between the tires (3) nor in the interior therein. Each time that the loading piston (11) moves backward for the loading of 20 a new tire, the retractable devices (4) take action to prevent the backward movement of the tires (3), preventing the lowering of compaction pressure and maintaining therewith the maximum hardness of rubber so that when the grinding roller (5) blades (6) impact, said tires do not move backward and the grinding occurs, both of the rubber and the metallic filaments of the tire, the machine being able to continuously load, without having to be stopped, with a maximum performance.

As can be observed in figures 1 and 3, the grinding roller (5), in oblique disposition and forming a 10° angle with respect to the shaft of the loading cylinder (2), remains directionally fixed, being rotational, upon carrying out the progressive grinding of the area of brushing and sides or bands of the tires (3) so that upon the arrival of the heelpieces the cones (16) take action which tear that area and in the end the shears (18) take action which cut the wires of the heelpieces into small pieces.

By means of the machine of the invention, it is possible to recycle all types of tires, and in a single process grind 100% of the tire, being applicable for tires from a wheelbarrow to heavy machinery, with canvas or with steel, achieving the separation of the rubber from the metallic material and supplying said materials in small portions separately.

The fact should be noted that when the tire is loaded in the cylinder (2), it is pressed with those that are there in the interior thereof, so that upon making physical contact with the latter, which are already pressed, the plate of disc (12) with the clutches (13) it will rotate at the speed of the loading cylinder (2), operated due to the contact with the tires.

With regard to the internal and expandable devices of the loading cylinder (2) it should be noted that they are disposed along the entire length of the cylinder, their utility being that of tightening the tire from the interior towards the exterior in order to slow it down and achieve that it does not rotate once the grinding roller (5) makes contact with the tire, furthermore being able with this device to regulate the advancement of the tires (3), tightening more or less, and being able to introduce different measurements of tires.

Returning to figure 7, there has been represented a steam exhaust hood (26), assisted by the corresponding exhaust (27). This hood affects the entire upper area of the machine and draws out the light waste generated during the grinding of the tires, specifically the textile material which takes part in some of them.

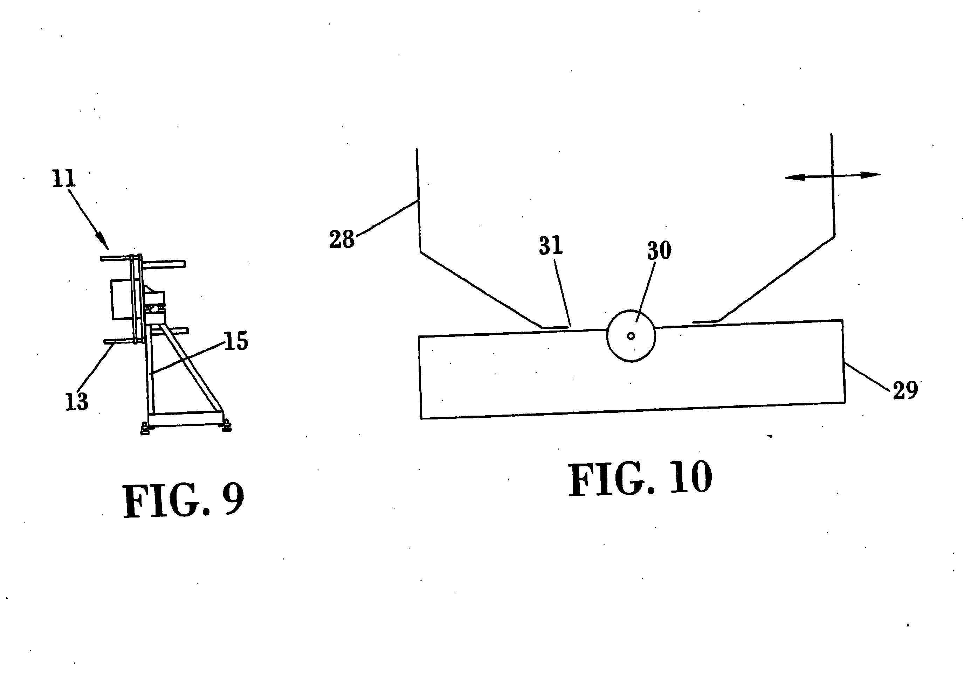

Also optionally, the milling of the tires can be strengthened with the incorporation to the machine of a nozzle (28), that shown in figure 10, which collects the waste of the tires grinded by the roller (5) and which channels them towards a collecting vessel (29), which, in turn, discharges on a conveyor belt, causing them to pass through the influential area of a roller blade (3)) rotating at high velocity. The nozzle (28) is equipped with an alternative transversal movement, with the aim of achieving a relative transversal mobility between the material and said roller (30), and the purpose thereof being the discharge outlet (31) of considerably greater size than the diameter of the roller (30) so that said mobility is feasible.

## Claims

1. Tire grinding machine, which comprises a loading cylinder (2) for the disposition of a tire (3), said tires coming into contact with the blades (6) of a grinding roller (5) disposed obliquely with respect to the loading cylinder (2), this and the grinding roller (5) being rotational and actionable by means of corresponding motors, and being the loading of the tire (3) on the cylinder (2) carried out by the pushing of a loading piston (11) equipped with a plate (12), is **characterised in that** the plate (12) comprises clutches (13) which grasp the tire (3) laterally and externally in order to centre it and push it on the cylinder (2), this having at its entrance end retractable devices (4) which retract in order to permit the introduction of each tire (3) and expand once said tire (3) is introduced in order to prevent the backward movement thereof and maintain the corresponding pressing of tires (3) on the loading cylinder (2), with the special feature that at the final internal end, and corresponding to the contact area with the heelpiece of the tires (3), the loading cylinder (2) includes cones (16) with blades and plates (17) as well as shears (18) with blades (19) for the grinding of said heelpieces.

2. Tire grinding machine, according to claim 1, **characterised in that** the cones (16) feature their oblique lateral surface with an inclination equal to that of the grinding roller (5).

3. Tire grinding machine, according to claim 1, **characterised in that** the shears (18) have the possibility to incorporate at one of their ends a conical supplement (20) with lateral elements (21) determining a type of conically configured worm for the guiding of the wires of the heelpiece of the tire (3) towards the cutting blades (19) of the shear (18).

4. Tire grinding machine, according to previous claims, **characterised in that** the assembly of the loading piston (11) is mounted on a frame (15), attached on the general frame (1) of the machine.

5. Tire grinding machine, according to previous claims, **characterised in that** the assembly of the loading piston (11) is guided in its axial movement on rods (22), which permit said movement in a centred manner and without overhangs of said piston.

6. Tire grinding machine, according to previous claims, **characterised in that** on the tire grinding area is a steam exhaust hood (26) assisted by an exhaust (27), which absorbs the light components of the tires, specifically the textile material which takes part in some of them.

7. Tire grinding machine, according to previous claims, **characterised in that** under the grinding roller (5) is a nozzle (28) which collects the grinded tire, which discharges, in turn, on a container (29), the bottom thereof materializing in a conveyor belt, through the area of work of a blade roller (30) which rotates at high velocity, being provided with a discharge outlet (31) of the nozzle (28), wherein actuates the blade roller (30), this distinctly multidimensional with respect to the diameter of said roller, with the aim of permitting a transversal movement of the nozzle with respect to the roller.

## Patentansprüche

1. Reifen-Zerkleinerungsmaschine, die einen Ladezylinder (2) für die Entsorgung eines Reifens (3) umfasst, wobei die besagten Reifen mit den Klingen (6) einer schräg im Bezug auf den Ladezylinder (2) angeordneten Mahlwalze (5) in Kontakt kommen, wobei dieser und die Mahlwalze (5) rotierbar und steuerbar mittels korrespondierender Motoren sind, und wobei die Beladung des Zylinders (2) mit dem Reifen (3) durch Druck eines Ladekolbens (11) ausgerüstet mit einer Platte (12) durchgeführt wird, **dadurch gekennzeichnet, dass** die Platte (12) Greifer (13) umfasst, die den Reifen (3) seitlich und äußerlich greifen, um ihn zu zentrieren und auf den Zylinder (2) zu schieben, wobei dieser an seinem Eingangsende einziehbare Bauteile (4) hat, die sich einziehen, um die Einführung eines jeden Reifens zu erlauben und sich ausfahren sobald der besagte Reifen (3) eingeführt wurde, um eine Rückwärtsbewegung desselben zu verhindern und das korrespondierende Anpressen der Reifen (3) auf den Ladezylinder (2) aufrechtzuerhalten mit dem speziellen Merkmal, dass am finalen internen Ende und korrespondierend zu den Kontaktflächen mit dem Fersenstück der Reifen (3), der Ladezylinder (2) Kegel (16) mit Klingen und Platten (17), sowie Scheren (18) mit Klingen (19) für das Zerkleinern der besagten Fersenstücke miteinschließt.

2. Reifen-Zerkleinerungsmaschine nach Anspruch 1, **dadurch gekennzeichnet, dass** die Kegel (16) eine schräge seitliche Oberfläche mit einer gleichgroßen Neigung wie die der Mahlwalze (5) aufweisen.

3. Reifen-Zerkleinerungsmaschine nach Anspruch 1, **dadurch gekennzeichnet, dass** die Scheren (18) die Möglichkeit haben, an einem ihrer Enden eine kegelförmige Ergänzung (20) mit seitlichen Elementen (21) zu enthalten, die eine Art kegelförmiges Gewinde zum Führen der Drähte des Fersenstücks des Reifens (3) in Richtung der Schneideklingen (19) der Schere (18) bilden.

4. Reifen-Zerkleinerungsmaschine nach den vorangehenden Ansprüchen, **dadurch gekennzeichnet, dass** die Anordnung des Ladekolbens (11) auf einem Rahmen (15) angebracht ist, der am allgemeinen Rahmen (1) der Maschine befestigt ist.

5. Reifen-Zerkleinerungsmaschine nach den vorangehenden Ansprüchen, **dadurch gekennzeichnet, dass** die Anordnung des Ladekolbens (11) in ihrer axialen Bewegung auf Rundstäben (22) geführt wird, welche die besagte Bewegung in einer zentrierten Weise und ohne Überhänge des besagten Kolbens erlauben.

6. Reifen-Zerkleinerungsmaschine nach den vorangehenden Ansprüchen, **dadurch gekennzeichnet, dass** auf der Reifen-Zerkleinerungs-Fläche eine Dampfabzugshaube (26) unterstützt von einem Auslass (27) ist, die die leichten Komponenten der Reifen absorbieren, insbesondere die Textilmaterialien, die in machen von ihnen vorkommen.

7. Reifen-Zerkleinerungsmaschine nach den vorangehenden Ansprüchen, **dadurch gekennzeichnet, dass** unter der Mahlwalze (5) eine Düse (28) ist, die den zerkleinerten Reifen sammelt und ihrerseits in einen Behälter (29) entlädt, dessen Boden in einem Förderband besteht, durch die Arbeitsfläche einer Messerwalze (30) hindurch, die in hoher Geschwindigkeit rotiert und eine Austrittsöffnung (31) der Düse (28) aufweist, worin sich die Messerwalze (30) bewegt, und zwar multidimensional im Bezug auf den Durchmesser der Walze, mit dem Ziel, eine transversale Bewegung der Düse im Bezug auf die Walze zu erlauben.

## Revendications

1. Machine de broyage de pneumatique, qui comprend un cylindre de chargement (2) pour la disposition d'un pneumatique (3), lesdits pneus entrant en contact avec les lames (6) d'un rouleau de broyage (5) disposé obliquement par rapport au cylindre de chargement (2), ce cylindre et le rouleau de broyage (5) étant aptes à tourner et à être actionnés au moyen de moteurs correspondants, et le chargement du pneu (3) sur le cylindre (2) effectué par la poussée d'un piston de chargement (11) pourvu d'une plaque (12), **caractérisée en ce que** la plaque (12) comprend des embrayages (13) qui saisissent le pneu (3) latéralement et extérieurement afin de le centrer et de le pousser sur le cylindre (2), ce cylindre comportant, à son extrémité d'entrée, des dispositifs rétractables (4) qui se rétractent afin de permettre l'introduction de chaque pneu (3) et se dilatent une fois ledit pneu (3) introduit afin d'empêcher son mouvement vers l'arrière et de maintenir la pression correspondante des pneus (3) sur le cylindre de chargement (2), la caractéristique spécifique étant que, à l'extrémité interne terminale, et en correspondance de la zone de contact avec le talon des pneus (3), le cylindre de chargement (2) comprend des cônes (16) avec des lames et des plaques (17) ainsi que des cisailles (18) avec des lames (19) pour le broyage desdits talons.

2. Machine de broyage de pneumatique, selon la revendication 1, **caractérisée en ce que** les cônes (16) ont leur surface latérale oblique présentant une inclinaison égale à celle du rouleau de broyage (5).

3. Machine de broyage de pneumatique, selon la revendication 1, **caractérisée en ce que** les cisailles (18) ont la possibilité d'inclure, à une de leurs extrémités, un élément supplémentaire conique (20) pourvu d'éléments latéraux (21) déterminant un type de vis sans fin conique pour le guidage des câbles du talon du pneu (3) vers les lames de coupe (19) de la cisaille (18).

4. Machine de broyage de pneumatique, selon les revendications précédentes, **caractérisée en ce que** l'ensemble du piston de chargement (11) est monté sur un châssis (15), fixé sur le bâti général (1) de la machine.

5. Machine de broyage de pneumatique, selon les revendications précédentes, **caractérisée en ce que** l'ensemble du piston de chargement (11) est guidé dans son mouvement axial sur des tiges (22), qui permettent ledit mouvement de manière centrée et sans dépassements dudit piston.

6. Machine de broyage de pneumatique, selon les revendications précédentes, **caractérisée en ce que** sur la zone de broyage de pneu se trouve un capot d'échappement de vapeur (26) secondé par un échappement (27), qui absorbe les composants légers des pneus, spécifiquement le matériau textile qui compose certains d'entre eux.

7. Machine de broyage de pneumatique, selon les revendications précédentes, **caractérisée en ce que**, sous le rouleau de broyage (5) se trouve une buse (28) qui recueille le pneu broyé, qui se décharge, à son tour, sur un récipient (29), dont le fond est matérialisé par une bande transporteuse, en passant par la zone d'opération d'un rouleau à lames (30) qui tourne à grande vitesse, la buse (28) étant pourvue d'une sortie de décharge (31), le rouleau à lames (30) étant actionné, la sortie de décharge étant distinctement multidimensionnelle par rapport au diamètre dudit rouleau, dans le but de permettre un mouvement transversal de la buse par rapport au rouleau.
